# EUROPÄISCHE PATENTANMELDUNG

(11) **EP 4 512 839 A1**
(43) Veröffentlichungstag der Anmeldung: **26.02.2025**
(21) Anmeldenummer: 23193348.2
(22) Anmeldetag: 25.08.2023
(51) Int. Cl.: C08G 18/22, C08G 18/24, C08G 18/34, C08G 18/73, C08G 18/75, C08G 18/79, C08G 18/81, C09D 175/14

(54) **WASSERBASIERTE STRAHLENHÄRTBARE POLYURETHANDISPERSIONEN MIT HERVORRAGENDEN ANWENDUNGSTECHNISCHEN EIGENSCHAFTEN**

(71) Anmelder: Covestro Deutschland AG, 51373 Leverkusen (DE)
(72) Erfinder: Greszta-Franz, Dorota, 42659 Solingen (DE); Ludewig, Michael, 51519 Odenthal (DE); Lederer, Joerg, 47608 Geldern (DE); Tejada Rosales, Eva, 08100 Mollet del Valles (ES)
(74) Vertreter: Levpat

(57) **Zusammenfassung**

Die vorliegende Erfindung betrifft strahlenhärtbare Polyurethandispersionen mit besonders hoher Doppelbindungsdichte. Diese Polyurethandispersion können eigenständig als Beschichtungsmittel eingesetzt werden, oder aber besonders vorteilhaft als Zusatz zu konventionellen Polyacrylatdispersionen oder zu strahlenhärtenden Polyurethandispersionen, um deren anwendungstechnische Eigenschaften zu verbessern.

## Beschreibung

Die vorliegende Erfindung betrifft strahlenhärtbare Polyurethandispersionen mit besonders hoher Doppelbindungsdichte. Diese Polyurethandispersion können eigenständig als Beschichtungsmittel eingesetzt werden, oder aber besonders vorteilhaft als Zusatz zu konventionellen Polyacrylatdispersionen oder zu strahlenhärtenden Polyurethandispersionen, um deren anwendungstechnische Eigenschaften zu verbessern.

Polyacrylatdispersionen sind häufig eingesetzte Beschichtungsmittel, da ihre Herstellung sehr kostengünstig ist. Allerdings sind die anwendungstechnischen Eigenschaften vielfach nicht vollständig befriedigend. Wenn eine hohe Qualität der Beschichtung gefordert wird, sind zweikomponentige Polyurethandispersionen die bessere Alternative. Diese haben aber wegen der Reaktivität des als Vernetzer eingesetzten Isocyanats eine beschränkte Topfzeit und benötigen häufig spezielle Vorrichtungen zur Anwendung. Außerdem sind sie teurer als Polyacrylatdispersionen.

In der vorliegenden Erfindung zugrundeliegenden Studie hat sich gezeigt, dass vor allem die Hydrophilie (gemessen z.B. durch Säurezahl) und die Doppelbindungsdichte der Dispersion ausschlaggebend sind, damit diese einerseits mit Polyacrylatdispersionen gut mischbar sind und andererseits die anwendungstechnischen Eigenschaften dieser Polyacrylatdispersion verbessern. Dies gilt insbesondere für die Blockfestigkeit und die Beständigkeit gegen Chemikalien. Hierbei ist hervorzuheben, dass die erfindungsgemäßen Dispersionen keine weiteren Colöser, zusätzlich zum Reaktivverdünner, enthalten.

EP 1869 097 beschreibt sehr generisch Zusammensetzungen enthaltend ein ethylenisch ungesättigtes Oligomer und ein Harz, das frei von energiehärtenden funktionellen Gruppen ist. Hierbei werden keine Oligomere mit den erfindungsgemäßen Eigenschaften beschrieben.

EP 0 453 838 beschreibt Urethanoligomere, die eine hohe Dichte an ethylenisch ungesättigten Gruppen aufweisen. Allerdings ist die Säurezahl niedriger und die Oligomere enthalten einen Colöser.

JP 2008-303258 beschreibt nichtionisch hydrophilierte Urethanacrylate. Diese haben wegen der nichtionischen Hydrophilierung keine Säurezahl und unterscheiden sich darin von den erfindungsgemäßen Reaktionsprodukten.

US 2016/0304742 beschreibt ein Polyurethanpolymer, das durch Kettenverlängerung eines isocyanatterminierten Präpolymers erhalten wird. Das in der erfindungsgemäßen Dispersion enthaltene Oligomer weist bedingt durch das Mengenverhältnis der Aufbaukomponenten bereits ohne Kettenverlängerung keine freien Isocyanatgruppen mehr auf.

Die vorliegende Erfindung wird durch die Patentansprüche und die in der nachfolgenden Beschreibung beschriebenen Ausführungsformen definiert.

In einer ersten Ausführungsform betrifft die vorliegende Erfindung eine wässrige Zusammensetzung enthaltend ein Produkt, erhalten oder erhältlich aus der Reaktion eines Reaktionsgemisches enthaltend
a) Eine Polyisocyanatkomponente A mit einer durchschnittlichen Isocyanatfunktionalität von wenigstens 2,2 NCO-Gruppen pro Molekül;
b) Wenigstens eine ionische oder potentiell ionische hydrophilierende Verbindung B mit wenigstens einer isocyanatreaktiven Gruppe pro Molekül; und
c) Eine optional hydroxyfunktionelle strahlenhärtbare Komponente C, welche wenigstens 2 (Meth)acrylatgruppen pro Molekül enthält;
wobei die Zusammensetzung eine Doppelbindungsdichte von wenigstens 7 mol/kg bezogen auf ihr Gesamtgewicht aufweist.

Der Begriff "Reaktionsgemisch" bezeichnet eine Mischung enthaltend die Komponenten A, B und C sowie optional wenigstens einen Katalysator in einer Form, die eine Reaktion ermöglicht, bei der Hydroxylgruppen und Isocyanatgruppen zu Urethangruppen vernetzt werden.

In einer bevorzugten Ausführungsform besteht das Reaktionsgemisch bezogen auf das Gesamtgewicht aller darin anwesenden Verbindungen mit Ausnahme von Wasser und inerten Lösungsmitteln zu wenigstens 90 Gew.-%, stärker bevorzugt zu wenigstens 95 Gew.-% und besonders bevorzugt zu wenigstens 98 Gew.-% aus den Komponenten A, B und C.

Das Produkt der Reaktion der Komponenten A, B und optional C weist bevorzugt eine Säurezahl von wenigstens 80 mg KOH/g auf.

Das molare Verhältnis von Hydroxylgruppen zu Isocyanatgruppen im Reaktionsgemisch liegt bei Reaktionsbeginn vorzugsweise zwischen 1 : 1 und 1,2 : 1.

Der Begriff "inerte Lösungsmittel" bezeichnet organische Verbindungen, die als Lösungsmittel für die Bestandteile des Reaktionsgemisches dienen, selbst aber nicht in der Lage sind, mit Isocyanatgruppen oder Hydroxylgruppen zu reagieren. Sie enthalten auch keine strahlenhärtbaren Gruppen, insbesondere keine ethylenisch ungesättigten Gruppen. Die Zugabe solcher inerter Lösungsmittel während der Synthese kann sinnvoll sein, sie werden während der Herstellung der erfindungsgemäßen wässrigen Zusammensetzung durch Destillation abgetrennt. Bevorzugte inerte Lösungsmittel sind N-Methylpyrrolidon, N-Ethylpyrrolidon, Butylacetat, Ethylacetat, Methoxypropylacetat, Diethylenglykoldimethylether, Dioxan, Dimethylformamid, Xylol, Toluol, Solvent Naphtha, Cyclohexanon, Methylisobutyl-keton, Diethylketon, Methylethylketon und Aceton.

Die Umsetzung der im Reaktionsgemisch vorliegenden Polyisocyanatkomponente A mit der ionisch oder potentiell ionisch hydrophilierenden Verbindung B führt zu einem Produkt, das nachfolgend auch als "erfindungsgemäßes Reaktionsprodukt" bezeichnet wird. Die Säurezahl des Produkts wird vorzugsweise gemäß DIN EN ISO 2114:2002-06 bestimmt.

Wenn die Komponente C hydroxyfunktionelle Moleküle enthält, so liegen in der erfindungsgemäßen wässrigen Zusammensetzung folgende Reaktionsprodukte vor: (i) Moleküle, die nur aus den Komponenten A und B aufgebaut sind und (ii) Moleküle, die aus den Komponenten A, B und C aufgebaut sind. Da auch eine hydroxyfunktionelle Komponente C wegen der niedrigen OH-Zahl Moleküle enthält, die über keine freien Hydroxylgruppen verfügen, werden zusätzlich auch immer freie Moleküle der Komponente C vorliegen. In diesem Fall ist das "Produkt", das die erfindungsgemäße Säurezahl aufweist ein Gemisch aus den Reaktionsprodukten (i) und (ii).

Bezogen auf ihr Gesamtgewicht enthält die erfindungsgemäße wässrige Zusammensetzung bevorzugt weniger als 5 Gew.-%, stärker bevorzugt weniger als 1 Gew.-% an inerten Lösemitteln.

### Polyisocyanatkomponente A

Der Begriff "Polyisocyanatkomponente A" bezeichnet die Gesamtheit aller Verbindungen im Reaktionsgemisch, die wenigstens eine Isocyanatgruppe pro Molekül tragen. Hierbei ist es erfindungswesentlich, dass alle Bestandteile der Polyisocyanatkomponente im Durchschnitt wenigstens 2,2 Isocyanatgruppen pro Molekül aufweisen, d.h. die Anwesenheit von Molekülen mit einer Isocyanatfunktionalität von weniger als 2,2 muss durch die Anwesenheit einer hinreichenden Anzahl von Molekülen mit einer Isocyanatfunktionalität von mehr als 2,2 ausgeglichen werden.

Die Polyisocyanatkomponente A enthält bevorzugt Polyisocyanate. Der Begriff "Polyisocyanat", wie hier verwendet, ist eine Sammelbezeichnung für Verbindungen, die im Molekül zwei oder mehrere Isocyanat-Gruppen (hierunter versteht der Fachmann freie Isocyanat-Gruppen der allgemeinen Struktur -N=C=O) enthalten. Einfachste und wichtigste Vertreter dieser Polyisocyanate sind die Diisocyanate. Diese haben die allgemeinen Struktur O=C=N-R-N=C=O, wobei R üblicherweise für aliphatische, alicyclische, araliphatische und/oder aromatische Reste steht

Der Begriff "Polyisocyanate" bezeichnet in dieser Anmeldung monomere und/oder oligomere Polyisocyanate gleichermaßen. Zum Verständnis vieler Aspekte der Erfindung ist es jedoch wichtig, zwischen monomeren Diisocyanaten und oligomeren Polyisocyanaten zu unterscheiden. Wenn in dieser Anmeldung von "oligomeren Polyisocyanaten" die Rede ist, dann sind damit Polyisocyanate gemeint, die aus mindestens zwei monomeren Diisocyanatmolekülen aufgebaut sind, d.h. es sind Verbindungen, die ein Reaktionsprodukt aus mindestens zwei monomeren Diisocyanatmolekülen darstellen oder enthalten.

Die Herstellung oligomerer Polyisocyanate aus monomeren Diisocyanaten wird hier auch als Modifizierung monomerer Diisocyanate bezeichnet. Diese "Modifizierung", wie hier verwendet, bedeutet dabei die Reaktion monomerer Diisocyanate gegebenenfalls weiterer isocyantreaktiver Moleküle zu oligomeren Polyisocyanaten mit Uretdion-, Isocyanurat-, Allophanat-, Biuret-, Iminooxadiazindion- und/oder Oxadiazintrionstruktur.

So ist z.B. Hexamethylen-1,6-diisocyanat (HDI) ein "monomeres Diisocyanat", da es zwei Isocyanatgruppen enthält und kein Reaktionsprodukt aus mindestens zwei Polyisocyanatmolekülen darstellt:

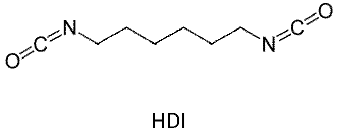

Reaktionsprodukte aus mindestens zwei HDI-Molekülen, die immer noch über mindestens zwei Isocyanatgruppen verfügen, sind demgegenüber "oligomere Polyisocyanate" im Sinne der Erfindung. Vertreter solcher "oligomerer Polyisocyanate" sind ausgehend von dem monomeren HDI z.B. das HDI-Isocyanurat und das HDI-Biuret, die jeweils aus drei monomeren HDI Molekülen aufgebaut sind: 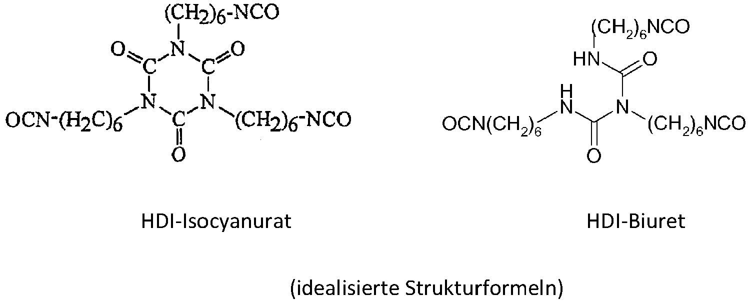 Vorzugsweise beträgt der Gewichtsanteil an Isocyanatgruppen bezogen auf die Gesamtmenge der Polyisocyanatkomponente A wenigstens 5 Gew.-%. Stärker bevorzugt wenigstens 10 Gew.-%.

Grundsätzlich sind monomere und oligomere Polyisocyanate zur Verwendung im erfindungsgemäßen Reaktionsgemisch gleichermaßen geeignet. Folglich kann die Polyisocyanatkomponente A aus monomeren Polyisocyanaten oder im Wesentlichen aus oligomeren Polyisocyanaten bestehen. Es kann aber auch oligomere und monomere Polyisocyanate in beliebigen Mischungsverhältnissen enthalten, vorausgesetzt, dass sie den weiter unten in dieser Anmeldung definierten NCO-Gehalt aufweist.

In einer bevorzugten Ausführungsform der Erfindung enthält die Polyisocyanatkomponente A aber wenigstens ein oligomeres Polyisocyanat. Vorzugsweise weist die Polyisocyanatkomponente A dabei einen Gehalt an monomeren Diisocyanaten von höchstens 60 Gew.-%, stärker bevorzugt höchstens 50 Gew.-%, noch stärker bevorzugt höchstens 40 Gew.-%, und besonders bevorzugt höchstens 5,0 Gew.-%, jeweils bezogen auf das Gewicht der Polyisocyanatkomponente A, auf.

Polyisocyanatzusammensetzungen, die monomerarm oder im Wesentlichen frei von monomeren Isocyanaten sind, lassen sich erhalten, indem nach der eigentlichen Modifizierungsreaktion in jedem Fall mindestens ein weiterer Verfahrensschritt zur Abtrennung der nicht umgesetzten überschüssigen monomeren Diisocyanate durchgeführt wird. Diese Monomerenabtrennung kann besonders praxisgerecht nach an sich bekannten Verfahren, vorzugsweise durch Dünnschichtdestillation im Hochvakuum oder durch Extraktion mit geeigneten gegenüber Isocyanatgruppen inerten Lösungsmitteln, beispielsweise aliphatischen oder cycloaliphatischen Kohlenwasserstoffen wie Pentan, Hexan, Heptan, Cyclopentan oder Cyclohexan, erfolgen.

Gemäß einer bevorzugten Ausführungsform der Erfindung wird ein monomerarmes oligomeres Polyisocyanat durch Modifizierung monomerer Diisocyanate mit anschließender Abtrennung nicht umgesetzter Monomere erhalten.

Gemäß einer weiteren besonderen Ausführungsform des erfindungsgemäßen Verfahrens enthält die Polyisocyanatkomponente A monomere Isocyanate mit einer Isocyanatfunktionalität größer zwei, d.h. mit mehr als zwei Isocyanatgruppen pro Molekül. Die Zugabe monomeren Isocyanaten mit einer Isocyanatfunktionalität größer zwei kann dazu dienen, die durchschnittliche Isocyanatfunktionalität der Polyisocyanatkomponente A einzustellen. Monomere Isocyanate mit einer Isocyanatfunktionalität > 2 sind zum Beispiel Triisocyanatononan und PMDI.

Die oligomeren Polyisocyanate können erfindungsgemäß insbesondere Uretdion-, Isocyanurat-, Allophanat-, Biuret-, Iminooxadiazindion- und/oder Oxadiazintrionstruktur aufweisen. Gemäß einer

Ausführungsform der Erfindung weisen die oligomeren Polyisocyanate mindestens eine der folgenden oligomeren Strukturtypen oder deren Gemische auf:

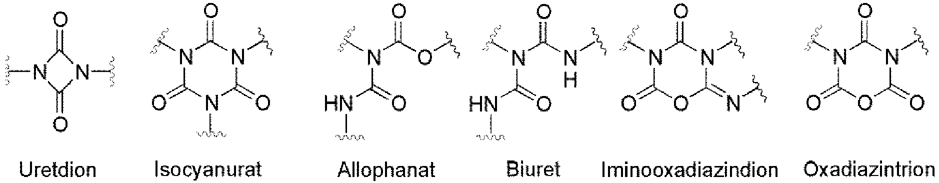

Gemäß einer bevorzugten Ausführungsform der Erfindung wird eine Polyisocyanatkomponente A eingesetzt, deren Isocyanuratstrukturanteil mindestens 50 mol-%, vorzugsweise mindestens 60 mol-%, stärker bevorzugt mindestens 70 mol-%, noch stärker bevorzugt mindestens 80 mol-%, noch stärker bevorzugt mindestens 90 mol-% und besonders bevorzugt mindestens 95 mol-% bezogen auf die Summe der vorliegenden oligomeren Strukturen aus der Gruppe, bestehend aus Uretdion-, Isocyanurat-, Allophanat-, Biuret-, Iminooxadiazindion- und Oxadiazintrionstruktur in der Polyisocyanatkomponente A, beträgt.

Gemäß einer weiteren bevorzugten Ausführungsform der Erfindung wird im erfindungsgemäßen Verfahren eine Polyisocyanatkomponente A, die neben der Isocyanuratstruktur mindestens ein weiteres oligomeres Polyisocyanat mit Uretdion-, Biuret-, Allophanat-, Iminooxadiazindion- und Oxadiazintrionstruktur und Mischungen davon enthält, eingesetzt.

Die Anteile an Uretdion-, Isocyanurat-, Allophanat-, Biuret-, Iminooxadiazindion- und/oder Oxadiazintrionstruktur in der Polyisocyanatkomponente A können z.B. durch NMR-Spektroskopie bestimmt werden. Bevorzugt lässt sich hierbei die 13C-NMR-Spektroskopie, vorzugsweise protonenentkoppelt, einsetzen, da die genannten oligomeren Strukturen charakteristische Signale liefern.

Besonders praxisgerechte Ergebnisse stellen sich ein, wenn die erfindungsgemäß einzusetzende Polyisocyanatkomponente A einen Gehalt an Isocyanatgruppen von 8,0 bis 40,0 Gew.-%, vorzugsweise von 14,0 bis 37,0 Gew.-%, besonders bevorzugt von 20,0 bis 35,0 Gew.-% jeweils bezogen auf das Gewicht der Polyisocyanatkomponente A, aufweist.

Herstellverfahren für die in der Polyisocyanatkomponente A einsetzbaren oligomeren Polyisocyanate mit Uretdion-, Isocyanurat-, Allophanat-, Biuret-, Iminooxadiazindion- und/oder Oxadiazintrionstruktur sind beispielsweise in J. Prakt. Chem. 336 (1994) 185 - 200, in DE-A 1 670 666, DE-A 1 954 093, DE-A 2 414 413, DE-A 2 452 532, DE-A 2 641 380, DE-A 3 700 209, DE-A 3 900 053 und DE-A 3 928 503 oder in EP-A 0 336 205, EP A 0 339 396 und EP-A 0 798 299 beschrieben.

Gemäß einer zusätzlichen oder alternativen Ausführungsform der Erfindung ist die Polyisocyanatkomponente A dadurch definiert, dass sie oligomere Polyisocyanate enthält, die aus monomeren Diisocyanaten unabhängig von der Art der verwendeten Modifizierungsreaktion unter Einhaltung eines Oligomerisierungsgrades von 5 bis 45 %, vorzugsweise 10 bis 40 %, besonders bevorzugt 15 bis 30 %, erhalten wurden. Unter "Oligomerisierungsgrad" ist dabei der Prozentsatz der in der Ausgangsmischung ursprünglich vorhandenen Isocyanatgruppen zu verstehen, der während des Herstellprozesses unter Bildung von Urethan-, Uretdion-, Isocyanurat-, Allophanat-, Biuret-, Iminooxadiazindion- und/oder Oxadiazintrionstrukturen verbraucht wird.

Geeignete Polyisocyanate zur Herstellung der erfindungsgemäß einzusetzenden Polyisocyanatkomponente A und der darin enthaltenen monomeren und/oder oligomeren Polyisocyanate sind beliebige, auf verschiedene Weise, beispielsweise durch Phosgenierung in der Flüssig- oder Gasphase oder auf phosgenfreien Weg, wie z.B. durch thermische Urethanspaltung, zugängliche Polyisocyanate. Besonders gute Ergebnisse stellen sich ein, wenn es sich bei den Polyisocyanaten um monomere Diisocyanate handelt. Bevorzugte monomere Diisocyanate sind solche, die ein Molekulargewicht im Bereich von 140 bis 400 g/mol aufweisen, mit aliphatisch, cycloaliphatisch, araliphatisch und/oder aromatisch gebundenen Isocyanatgruppen, wie z. B. 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3-und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyl-dicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan, 1,3-Dimethyl-5,7-diisocyanatoadamantan, 1,3- und 1,4-Bis-(iso-cyanatomethyl)benzol (Xylylendiisocyanat; XDI), 1,3- und 1,4-Bis(1-isocyanato-1-methyl,ethyl)-benzol (TMXDI) und Bis(4-(1-isocyanato-1-methylethyl)phenyl)-carbonat, 2,4- und 2,6-Diisocyanatotoluol (TDI), 2,4'- und 4,4'-Diisocyanatodiphenylmethan (MDI), 1,5-Diisocyanatonaphthalin sowie beliebige Gemische solcher Diisocyanate. Weitere ebenfalls geeignete Diisocyanate finden sich darüber hinaus beispielsweise in Justus Liebigs Annalen der Chemie Band 562 (1949) S. 75 - 136.

Geeignete monomere Monoisocyanate, die in der Polyisocyanatkomponente A gegebenenfalls eingesetzt werden können, sind beispielsweise n-Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyanat oder beliebige Gemische solcher Monoisocyanate. Als monomeres Isocyanat mit einer Isocyanatfunktionalität größer zwei, das der Polyisocyanatkomponente A gegebenenfalls zugesetzt werden kann, sei beispielhaft 4-Isocyanatomethyl-1,8-octandiisocyanat (Triisocyanatononan; TIN) genannt.

Gemäß einer bevorzugten Ausführungsform der Erfindung enthält die Polyisocyanatkomponente A höchstens 30 Gew.-%, insbesondere höchstens 20 Gew.-%, höchstens 15 Gew.-%, höchstens 10 Gew.-%, höchstens 5 Gew.-% oder höchstens 1 Gew.-%, jeweils bezogen auf das Gesamtgewicht der Polyisocyanatkomponente A, an aromatischen Polyisocyanaten. Wie hier verwendet, bedeutet "aromatisches Polyisocyanat" ein Polyisocyanat, welches mindestens eine aromatisch gebundene Isocyanatgruppe aufweist. Unter aromatisch gebundenen Isocyanatgruppen werden Isocyanatgruppen verstanden, die an einen aromatischen Kohlenwasserstoffrest gebunden sind.

Gemäß einer besonders bevorzugten Ausführungsform der Erfindung besteht die Polyisocyanatkomponente A zu mindestens 90, stärker bevorzugt 95, noch stärker bevorzugt 98 und am stärksten bevorzugt 99 Gew.-%, jeweils bezogen auf das Gesamtgewicht der Polyisocyanatkomponente A, aus Polyisocyanaten, die ausschließlich aliphatisch und/oder cycloaliphatisch gebundene Isocyanatgruppen aufweisen. Praktische Versuche haben gezeigt, dass sich besonders gute Ergebnisse mit Polyisocyanatkomponente A erzielen lassen, bei denen die darin enthaltenen Isocyanate ausschließlich aliphatisch und/oder cycloaliphatisch gebundene Isocyanatgruppen aufweisen.

Unter aliphatisch bzw. cycloaliphatisch gebundenen Isocyanatgruppen werden Isocyanatgruppen verstanden, die an einen aliphatischen bzw. cycloaliphatischen Kohlenwasserstoffrest gebunden sind.

Gemäß einer weiteren besonders bevorzugten Ausführungsform des erfindungsgemäßen Verfahrens wird eine Polyisocyanatkomponente A eingesetzt, die aus einem oder mehreren oligomeren Polyisocyanaten besteht oder diese enthält, wobei die ein oder mehreren oligomeren Polyisocyanate ausschließlich aliphatisch und/oder cycloaliphatisch gebundene Isocyanatgruppen aufweisen.

Gemäß einer besonders bevorzugten Ausführungsform des erfindungsgemäßen Verfahrens wird eine Polyisocyanatkomponente A eingesetzt, die aus einem oder mehreren oligomeren Polyisocyanaten besteht oder diese enthält, wobei die ein oder mehreren oligomeren Polyisocyanate auf Basis von 1,4-Diisocyanatobutan (BDI), 1,5-Diisocyanatopentan (PDI), 1,6-Diisocyanatohexan (HDI), Isophorondiisocyanat (IPDI) oder 4,4'-Diisocyanatodicyclohexylmethan (H12MDI) oder deren Mischungen aufgebaut sind.

### Ionische oder potentiell ionische hydrophilierende Verbindung B

Damit das erfindungsgemäße Reaktionsprodukt die oben definierte Säurezahl aufweist, ist die Verwendung einer ionischen oder potentiell ionischen hydrophilierenden Gruppe essentiell. Zusätzlich können auch Verbindungen mit nicht-ionisch hydrophilierenden Gruppen eingesetzt werden, solange die Mengenverhältnisse so gewählt werden, dass die erfindungsgemäß notwendige Säurezahl erreicht wird.

Die ionische oder potentiell ionische hydrophilierende Verbindung B enthält wenigstens eine isocyanatreaktive Gruppe. Unter dem Begriff "isocyanatreaktive Gruppe" werden alle funktionellen Gruppen verstanden, die über wenigstens ein Zerewitinoff-aktives Wasserstoffatom verfügen. Vorzugsweise bezeichnet der Begriff Hydroxyl- Amino- und Thiol Gruppen, besonders bevorzugt Hydroxylgruppen.

Bei den ionisch oder potentiell ionisch hydrophilierenden Verbindungen handelt es sich bevorzugt um Hydroxy- oder Aminocarbonsäuren, bevorzugt um Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze. Stärker bevorzugt handelt es sich um wenigstens eine Verbindung ausgewählt aus der Gruppe bestehend aus Dimethylolpropionsäure, Dimethylolbuttersäure, Hydroxypivalinsäure, N-(2-Aminoethyl)-alanin, 2-(2-Amino-ethylamino)-ethansulfonsäure, Ethylendiamin-propylsäure, Ethylendiaminbutylsulfon-säure, 1,2- und 1,3-Propylendiamin-ethylsulfonsäure, Äpfelsäure, Zitronensäure, Glykolsäure, Milchsäure, Glycin, Alanin, Taurin, Lysin, 3,5-Diaminobenzoesäure, Polyethersulfonat, das Addukt von Natriumbisulfit an Buten-2-diol-1,4 und die Alkali und Ammoniumsalze der vorgenannten Verbindungen. Noch stärker bevorzugt wird als Verbindung B wenigstens eine Verbindung ausgewählt aus der Gruppe bestehend aus 2,2-Dimethylolessigsäure, 2,2-Dimethylolbuttersäure, 2,2-Dimethylolpentansäure, Dihydroxybernsteinsäure, α,Ω-Diaminovaleriansäure, verwendet. Als Verbindung B besonders bevorzugt ist 2,2-Dimethylolpropionsäure. Alternativ können auch monohydroxyfunktionelle Verbindungen, die wenigstens eine Carbonsäuregruppe aufweisen, wie zum Beispiel Hydroxypivalinsäure oder Hydroxydecansäure eingesetzt werden. Mischungen von zwei oder mehr der vorgenannten Verbindungen sind ebenfalls bevorzugt. Weniger bevorzugt können auch Polyhydroxysäuren, insbesondere Glukonsäure als Verbindung B eingesetzt werden.

Die oben genannten Säuren werden durch Umsetzung mit Neutralisationsmitteln, wie z.B. Triethylamin, Ethyldiisopropylamin, Dimethylcyclohexylamin, Dimethylethanolamin, Ammoniak, N-Methylmorpholin, NaOH, LiOH und/oder KOH in die entsprechenden Salze überführt. Bei Neutralisationsmitteln, die nicht mit Isocyanaten reagieren, kann dies zu jedem beliebigen Zeitpunkt der Herstellung bis einschließlich des Dispergierschrittes erfolgen. Der Neutralisationsgrad, d.h. die Anzahl an Äquivalenten an Neutralisationsmittel bezogen auf die Anzahl an Äquivalenten an potentiell ionischen Gruppen kann zwischen 30 und 150 %, bevorzugt zwischen 50 und 110 % liegen.

Optional einzusetzende nichtionisch hydrophilisierende Verbindungen sind Polyalkylenoxidpolyetheralkohole oder Polyalkylenoxidpolyetheramine, insbesondere Polyethylenoxidpolyether oder gemischte Polyalkylenoxidpolyether, deren Alkylenoxideinheiten zu mindestens 30 Mol-% aus Ethylenoxideinheiten bestehen.

### Strahlenhärtbare Komponente C

Die Bezeichnung "strahlenhärtbare Komponente C" bezeichnet alle im Reaktionsgemisch anwesenden Verbindungen mit zwei oder mehr ethylenisch ungesättigten Gruppen. Bei diesen ethylenisch ungesättigten Gruppen handelt es sich vorzugsweise um (Meth)acrylatgruppen. Es ist bevorzugt, dass wenigstens 80 mol-%, bevorzugt wenigstens 90 mol-% und besonders bevorzugt wenigstens 95 mol-% der in der Komponente C enthaltenen Moleküle ein Molekulargewicht zwischen 170 und 800 g/mol aufweisen. Es ist aber produktionsbedingt nicht auszuschließen, dass einzelne der Moleküle während der Synthese oligomerisieren, so dass die Komponente C auch einen kleinen Anteil größerer Moleküle enthalten kann.

Es ist erfindungsgemäß möglich, eine Mischung von zwei oder mehr Verbindungen, die die hier definierten Merkmale aufweisen, als strahlenhärtbare Komponente C zu verwenden.

In einer bevorzugten Ausführungsform der vorliegenden Erfindung enthält die strahlenhärtbare Komponente C wenigstens einen (Meth)acrylatester enthaltend einen Alkohol ausgewählt aus der Gruppe bestehend aus 1,2-Ethandiol, 1,2-Propandiol, 1,3-Propandiol, 1,4-Butandiol, 1,3-Butandiol, 1,5-Pentandiol, 1,6-Hexandiol, 1,10-Decandiol, 1,12-Dodecan-Diol, 1,3-Butandiol, 2,2-dimethyl-1,3-Propandiol, 2-methy1-1,3-Propandiol, Diethylenglykol, Triethylenglykol, Tetraethylenglykol, Dipropylenglykol, Tripropylenglykol, 1,4- und 1,6-Dimethylolcyclohexan, Glycerin, Trimethylolpropan, Trimethylolethan, Pentaerythritol, Diglycerin, Ditrimethylolpropan, Dipentaerytritol, Sorbitol und alkoxylierten Derivaten der vorstehenden Alkohole.

In einer besonders bevorzugten Ausführungsform der vorliegenden Erfindung enthält die strahlenhärtbare Komponente C wenigstens einen (Meth)acrylatester enthaltend einen Alkohol ausgewählt aus der Gruppe bestehend aus Pentaerythritol, Ditrimethylolpropan, Dipentaerytritol, und alkoxylierten Derivaten der vorstehenden Alkohole.

In einer weiteren besonders bevorzugten Ausführungsform besteht die Komponente C bezogen auf ihr Gesamtgewicht zu wenigstens 60 Gew.-%, bevorzugt zu wenigstens 80 Gew.-%, stärker bevorzugt zu wenigstens 90 Gew.-% und besonders bevorzugt zu wenigstens 95 Gew.-% aus einer oder mehrerer der im vorangehenden Absatz definierten Verbindungen.

Wenn die Komponente C hydroxyfunktionell ist, so weist sie erfindungsgemäß eine OH-Zahl zwischen 1 und 60, bevorzugt zwischen 5 und 60 mg KOH/g auf, vorzugsweise bestimmt nach DIN EN ISO 4629-2:2015-02. Für die vorteilhaften Eigenschaften der wässrigen Zusammensetzung ist es wesentlich, dass die Obergrenze von 60 mg KOH/g eingehalten wird.

### Katalysator D

Zur Beschleunigung der Reaktion enthält das Reaktionsgemisch in einer bevorzugten Ausführungsform der vorliegenden Erfindung zusätzlich einen Katalysator D. Geeignete Katalysatoren zur Beschleunigung der Reaktion sind prinzipiell alle, die die Umsetzung von Isocyanatgruppen mit Hydroxylgruppen katalysieren. Diese sind dem Fachmann bekannt oder können der gängigen Literatur zur Urethansynthese entnommen werden. Insbesondere sind tertiäre Amine, Zinn-, Zink-, Zirkonium-, Kupfer- und/oder Wismuthverbindungen geeignet, bevorzugt Triethylamin, Ethyldiisopropylamin, Dimethylcyclohexylamin, N-Methylmorpholin, 1,4-Diazabicyclo-[2,2,2]-oktan, Dibutylzinnoxid, Dibutylzinndilaurat, Zinn (II) 2-ethylhexyloctoat, Wismuth (III) 2 -ethylhexyloctoat. Ebenfalls geeignet sind Salze des Zinks, des Titans, des Molybdän. Geeignete Mengen sind z.B. 0,002 bis 2,5 Gew.-%, bevorzugt 0,01 bis 1 Gew.-% bezogen auf die Gesamtmasse des Reaktionsgemisches. Die Umsetzung kann auch ohne Verwendung eines Katalysators durchgeführt werden

### Herstellungsverfahren

Die Herstellung der erfindungsgemäßen Dispersionen erfolgt bei Temperaturen von 20 °C bis 150 °C, bevorzugt 25 °C bis 75°C. Die Komponenten A, B und C und optional D können zu Reaktionsbeginn mit inerten Lösemitteln verdünnt vorliegen. Die Zugabe des inerten Lösemittel kann auch in jedem beliebigen Reaktionsschritt erfolgen. Das optional eingesetzte inerte Lösemittel kann anschließend destillativ abgetrennt werden. Eine Herstellung ohne Verwendung von inerten Lösemitteln ist möglich, bevorzugt erfolgt jedoch die Herstellung in inerten Lösemitteln. Bevorzugt ist die Herstellung in 3 bis 50 Gew.-% bezogen auf die Gesamtmasse des Reaktionsgemisches, besonders bevorzugt in 5 bis 25 Gew.-% eines inerten Lösungsmittels, insbesondere Aceton, mit anschließender destillativer Entfernung des Lösemittels nach Herstellung der Dispersion bzw. während des Dispergierschrittes.

In einer bevorzugten Ausführungsform der vorliegenden Erfindung erfolgt die Herstellung der wässrigen Zusammensetzung ohne Kettenverlängerung des darin enthaltenen Reaktionsprodukts. Dies bedeutet, dass kein Aufbau von Molekulargewicht dadurch erfolgt, dass eventuell nach der Reaktion der Komponenten A, B und C noch vorhandene freie Isocyanatgruppen unter Verwendung von Verbindungen mit zwei oder mehr Hydroxy-, Thiol- oder Aminogruppen pro Molekül umgesetzt werden. Es ist ebenfalls bevorzugt, dem fertigen Reaktionsprodukt keine weiteren Polyisocyanate zuzusetzen, die zu einer Vernetzung eventuell vorhandener freier Hydroxylgruppen führen.

### Wässrige Acrylatdispersion

In einer weiteren Ausführungsform betrifft die vorliegende Erfindung eine wässrige Beschichtungszusammensetzung enthaltend als Komponente (i) wenigstens eine wässrige Zusammensetzung enthaltend ein Produkt wie oben in dieser Anmeldung definiert und als Komponente (ii) wenigstens eine Polyacrylatdispersion oder wenigstens eine Polyurethandispersion oder eine Mischung aus wenigstens einer Polyacrylatdispersion und wenigstens einer Polyurethandispersion.

In einer bevorzugten Ausführungsform beträgt der Gewichtsanteil des Festkörpers der Komponente (i) bezogen die Gesamtmasse des gesamten Festkörpers der Komponenten (i) und (ii) 5 bis 60 Gew.-%, bevorzugt 10 bis 50 Gew.-%, stärker bevorzugt 20 bis 30 Gew.-%.

In einer besonders bevorzugten Ausführungsform der vorliegenden Erfindung besteht Binder in der Beschichtungszusammensetzung zu wenigstens 30 Gew.-% bezogen auf sein Gesamtgewicht aus den Komponenten (i) und (ii). Unter "Binder" wird hier jede Verbindung oder Zusammensetzung verstanden, die der Beschichtung Festigkeit verleiht, insbesondere Polymere mit einem zahlenmittleren Molekularwicht von wenigstens 5.000 g/mol. Nicht als Binderbestandteile zählen insbesondere Pigmente, UV-stabilisatoren, Katalysatoren, rheologische Additive und inerte Lösungsmittel.

### Polyacrylatdispersion

Als Komponente (ii) sind im Prinzip alle im Stand der Technik bekannten nicht-ionischen und anionischen Polyacrylat-Emulsionspolymerisate geeignet. Solche Polymerisate werden in der Regel durch Polymerisation von Acryl- und/oder Methacrylsäure-Estern der 1 bis 10 C Atome enthaltenden Alkanole hergestellt. Die Polyacrylat-Emulsionspolymerisate können bis zu 60 Gew.-% Styrol, bis zu 20 Gew.-% Vinylester und/ oderbis zu 10 Gew.-% wasserlösliche monoolefinisch ungesättigte CoMonomeren enthalten. Bevorzugte wasserlösliche monoolefinisch ungesättigte Co-Monomere sind Acrylsäure, Methacrylsäure, Itaconsäure, Acrylamid und Methacrylamid. Die Polymerisation erfolgt vorzugsweise in wässriger Emulsion bei 30 bis 95 °C in Gegenwart radikalbildender Polymerisationsinitiatoren, wie z.B. wasserlöslichen Peroxiden, z.B. Persulfaten wie Ammoniumpersulfat oder Kaliumpersulfat. Dabei werden im allgemeinen anionische und/oder nichtanionische Emulgatoren in Mengen von 0,1 bis 5 Gew.-% eingesetzt. Solche Polymerisate und deren Herstellung sind beispielhaft unter anderem in EP0065162B1 oder in U. Poth et. al. Acrylic Resins, Vincentz Network, (2011) beschrieben. Selbstvernetzende nicht-ionische und anionische Polyacrylat-Emulsionspolymerisate wie z.B. in D. Mestach, FATIPEC Congress (2000), 25th(Vol. 2), 347-361 beschrieben, sind ebenfalls geeignet.

### Polyurethandispersion

Anionische 1K Polyurethan Dispersionen sind ebenfalls als Komponente (ii) sind geeignet. Hierbei handelt sich um im Stand der Technik bekannte hochmolekulare, nicht funktionelle Polyurethandispersionen. Diese enthalten vorzugsweise die Reaktionsprodukte von Polyisocyanaten mit Polyetherpolyolen, Polycarbonatpolyolen und/oder Polyesterpolyolen sowie wenigstens einer der oben als Komponente B definierten hydrophilierenden Verbindungen. Diese Reaktionsprodukte weisen vorzugsweise einen zahlenmittleres Molekulargewicht zwischen 50.000 und 200.000 g/mol auf.

Anionische UV-härtbare Polyurethan Dispersionen sind ebenfalls als Komponente (ii) sind geeignet. Derartige Dispersionen sind in U. Meier-Westhues, Polyurethane, Vincentz Network, (2007) ausführlich beschrieben

Die der vorliegenden Erfindung zugrundeliegende Studie hat gezeigt, dass die wässrige Zusammensetzung enthaltend das erfindungsgemäße Reaktionsprodukt gut geeignet ist, um durch Abmischung mit Polyacrylatdispersionen und/oder Polyurethandispersionen die anwendungstechnischen Eigenschaften der vorgenannten zu verbessern, selbst wenn die wässrige Zusammensetzung enthaltend das erfindungsgemäße Reaktionsprodukt einen deutlich geringeren Anteil am Gemisch hat als die Polyacrylat- und/oder Polyurethandispersion.

Deswegen betrifft die vorliegende Erfindung in einer weiteren Ausführungsform die Verwendung der weiter oben definierten wässrigen Zusammensetzung enthaltend das erfindungsgemäße Reaktionsprodukt zur Verbesserung der anwendungstechnischen Eigenschaften einer Polyacrylat- und/oder Polyurethandispersion.

Bei den verbesserten anwendungstechnischen Eigenschaften handelt es sich vorzugsweise um die Blockfestigkeit und/oder die Chemikalienbeständigkeit. Bei der Chemikalienbeständigkeit handelt es sich vorzugsweise um die Beständigkeit gegenüber lod, Ethanol, Rotwein, Kaffee oder Wasser.

Durch die Abmischung konventioneller Polyacrylat- und Polyurethandispersionen mit dem erfindungsgemäßen Reaktionsprodukt lassen sich Beschichtungszusammensetzungen erhalten, deren anwendungstechnische Eigenschaften gegenüber den reinen Dispersionen deutlich verbessert sind und das Niveau von zweikomponentigen Polyurethandispersionen erreichen. Anders als die bekannten 2K-Zusammensetzungen haben die erfindungsgemäßen Gemische aber keine Topfzeit, da das erfindungsgemäße Reaktionsprodukt keine freien Isocyanatgruppen enthält.

In noch einer weiteren Ausführungsform betrifft die vorliegende Erfindung eine Beschichtung erhalten oder erhältlich aus der erfindungsgemäßen wässrigen Zusammensetzung enthaltend das oben definierte erfindungsgemäße Reaktionsprodukt.

Abmischungen des erfindungsgemäßen Reaktionsprodukts mit Polyurethandispersionen sind besonders gut geeignet, um die Abriebbeständigkeit von Bodenbelägen aus Kunststoff, insbesondere solchen, die Polyvinylchlorid enthalten oder daraus bestehen, zu verbessern.

Abmischungen des erfindungsgemäßen Reaktionsprodukts mit Polyacrylatdispersionen sind besonders gut geeignet, um die Chemikalienbeständigkeit, insbesondere die Beständigkeit gegenüber färbenden Substanzen, von Beschichtungen auf Holz zu verbessern. Gleichzeit erhöht sich die Blockfestigkeit.

In noch einer weiteren Ausführungsform betrifft die vorliegende Erfindung eine Beschichtung erhalten oder erhältlich aus der oben definierten wässrigen Zusammensetzung enthaltend wenigstens eine Komponente (i) und wenigstens eine Komponente (ii).

Es ist bevorzugt, dass die Beschichtung auf einer Oberfläche ausgewählt aus der Gruppe bestehend aus Holz, Kunststoff, Metall und Verbundwerkstoffen vorliegt. Bei dem Kunststoff handelt es sich bevorzugt um Polyvinylchlorid und besonders bevorzugt um einen Bodenbelag, der Polyvinylchlorid enthält oder daraus besteht.

Die nachfolgenden Ausführungsbeispiele dienen nur dazu, die Erfindung zu illustrieren. Sie sollen den Schutzbereich der Patentansprüche in keiner Weise beschränken.

### Ausführungsbeispiele

### Rohstoffe

DPPA - Dipentaerythithritolpentaacrylat, erhältlich z.B. unter dem Handelsnamen Miramer M 500, Miwon Specialty Chemical Co.
DPHA - Dipentaerythithritolhexaacrylat, erhältlich z.B. unter dem Handelsnamen Miramer M 600, Miwon Specialty Chemical Co, oder AgiSyn 2830L, Covestro AG
PETiA - Pentaerythithritoltriacrylat, erhältlich z.B. unter dem Handelsnamen AgiSyn 2884, Covestro AG
Laromer PE 44 F - flüssiges Polyesteracrylat, frei von Reaktivverdünner, erhältlich von der BASF S.E.
Desmodur N 3600 - Niedrigviskoses HDI-Trimerisat, ca. 23% NCO, Covestro AG
Desmodur N 3300 - HDI-Trimerisat, ca. 22% NCO, Covestro AG
HDI - Hexamethylendiisocyanat
IPDI - Isophorondiisocyanat
DBTL - Dibutylzinndilaurat
Borchi Kat 24 - Bismuth Katalysator, Borchers GmbH
Kosmos T9 - Zinn di(2-ethylhexanoat), Evonik Operations GmbH
DMPS = 2,2-Bis(hydroxymethyl)propionsäure
HPS = 2,2-Dimethyl-3-hydroxypropionsäure
Bayhydrol A 2846 - eine selbstvernetzende hydroxyfunktionelle Polyacrylatdispersion, Covestro AG
Picassian AC-169 - eine wässrige anionische, selbstvernetzende Styrol-Acryl-Copolymer-Emulsion, Stahl Holdings BV
Carboset CA7160 RC - eine Styrol-Acryl-Copolymer-Emulsion, Lubrizol
Bayhydrol UV 2282 - eine UV-härtende, wässrige Polyurethandispersion, Covestro AG
Bayhydrol UV 2720/1 - eine UV-härtende, wässrige Polyurethandispersion, Covestro AG

### Methoden

Viskositätsmessungen erfolgten mit einem Physica MCR 51 Rheometer der Fa. Anton Paar Germany GmbH (DE) nach DIN EN ISO 3219:1994-10.

Die Bestimmung der NCO-Gehalte erfolgte titrimetrisch nach DIN EN ISO 11909:2007-05.
Bestimmung des nicht flüchtigen Anteils (n.f.A) erfolgte mittels Umluftofen nach DIN EN ISO 3251:2008-06, Verfahren B (1g / 1h / 125°C)
Die Bestimmung der mittleren Teilchengröße (MTG) erfolgte mit einem Zetasizer Nano der Malvern (DE) nach DIN ISO 13321:2004-10
Die pH Wert Bestimmung erfolgte mit einem pH-Meter nach DIN ISO 976:2008-07 in Verdünnung 1:4 mit destillierten Wasser.

### Auslaufzeit - Messungen erfolgten nach DIN EN ISO 2431:2011 mit einem 4 mm Becher bei 23°C.

Die Ermittlung der Glanz und Haze-Werte erfolgte nach DIN EN ISO 2813: 2015 auf schwarzem Plexiglas, wenn nicht anders im Text angegeben.

Chemikalien - Beständigkeit wurde nach DIN EN 68861-1 1B 2011_01 und IKEA IOS-MAT-066 R2 & R0 auf Melamin-foliertes MDF-Platten bestimmt, wenn nicht anders im Text erläutert. Aufgezeichnet wurde die sofortige Beschädigung bzw. die Beschädigung nach Regeneration, wenn im Text entsprechend angegeben. Die Durchführung und Bewertung erfolgte nach DIN EN 12720 2014_2: 5 - keine Veränderung, 1 - starke Veränderung

Die Bleistifthärte wurde entsprechend DIN EN ISO 15184 2020_05 auf Glas ermittelt; wenn nicht anders im Text erläutert.

Die Pendelhärte wurde entsprechend DIN EN ISO 1522: 2022 nach König auf Glas nach 1 bzw. nach 7 Tagen gemessen.

Die Abriebfestigkeit wurde nach ASTM D 4060-1 (Taber - Abraser, 1000g Gewicht Schleifscheibe CS 10, 1000 Kreise) bestimmt.

Die Blockfestigkeit wurde wie folgt bestimmt: die beschichteten Substrate (gleich große, Melamin-foliertes MDF-Platten) wurden nach der Bestrahlung auf einander gelegt, so dass die beschichteten Seiten in Kontakt zu einander sind und ein Kreuz bilden. Darauf wird ein Gewicht gelegt, wobei es sich aus der Oberfläche des Substrates und Masse des Gewicht die entsprechende Last ergibt. Nach der gegeben Zeit wurde das Gewicht entfernt und es wurde versucht, manuell die Teile voneinander zu trennen. Es wurden sowohl die nötige Kraft als auch die entstandenen Schäden an den Oberflächen bewertet.

| Kraft: | Beschädigung: |
|---|---|
| A - Es ist nicht möglich, die Teile zu trennen | 0 - Es ist nicht möglich, die Teile zu trennen |
| B - Sehr hohe Kraft, um eine Trennung zu erreichen | 1 - Erheblicher Schaden 2 - Geringfügige Beschädigung |
| C - Hohe Kraft, um eine Trennung zu erreichen | 3 - Sichtbare Markierungen |
| D - Durchschnittliche Kraft, um eine Trennung zu erreichen | 4 - Sichtbare leichte Flecken |
| E - Leichte Kraft, um die Trennung zu erreichen | 5 - Keine Beschädigung |
| F - Die Teile sind vollständig getrennt | |

### Beispiel 1 (erfindungsgemäß)

69,13 g DPPA, 212,50 g DPHA, 68,50 g Desmodur N 3600, 0,18 g DBTL 24 und 65 g Aceton wurden in einem Reaktor vorgelegt, auf 60 °C erwärmt und gerührt bis eine homogene Mischung entstand. Danach wurden 6,70 g DMPS und 11,80g HPS zugegeben und es wurde weiter bei 60 °C gerührt bis der NCO-Gehalt einen Wert von < 0,3 Gew.-% erreichte. Anschließend wurden der Mischung 15,00 g Triethylamin zugefügt. Nach weiteren 15 Minuten wurde die Mischung mit 481,68 g Wasser dispergiert. Zum Schluss wurde Aceton unter Vakuum destillativ entfernt. Man erhielt eine Dispersion mit folgenden Kenndaten:

| n.f.A | 48 Gew.-% |
|---|---|
| Auslaufzeit (DIN 4mm, 23°C) | 33 Sek. |
| pH Wert | 7,3 |
| MTG : | 69 nm |

### Beispiel 2 (erfindungsgemäß)

1082,17 g DPPA, 156,65 g Desmodur N 3600, 92,61 g HDI, 0,74 g Borchikat 24 und 96 g Aceton wurden in einem Reaktor vorgelegt, auf 60 °C erwärmt und gerührt bis eine homogene Mischung entstand. Danach wurden 82,08 g DMPS, gefolgt von 223 g Aceton zu der Mischung gegeben und es wurde weiter bei 60° C gerührt bis der NCO-Gehalt einen Wert von < 0,3 Gew.-% erreichte. Anschließend wurden der Mischung 59,44 g Triethylamin zugefügt. Nach weiteren 15 Minuten wurde die Mischung mit 1871,80 g Wasser dispergiert. Zum Schluss wurde Aceton unter Vakuum destillativ entfernt. Man erhielt eine Dispersion mit folgenden Kenndaten:

| n.f.A | 43 Gew.-% |
|---|---|
| Auslaufzeit (DIN 4mm, 23°C) | 32 Sek. |
| pH Wert | 7,9 |
| MTG : | 41 nm |

### Beispiel 3 (erfindungsgemäß)

530,04 g DPPA, 81,90 g Desmodur N 3300, 45,36 g HDI und 0,36 g Borchikat 24 wurden in einem Reaktor vorgelegt, auf 60 °C erwärmt und gerührt bis eine homogene Mischung entstand. Danach wurden 40,20 g DMPS, gefolgt von 156 g Aceton zu der Mischung gegeben und es wurde weiter bei 60 °C gerührt bis der NCO-Gehalt einen Wert von 0,2 Gew.-% erreichte. Anschließend wurden der Mischung 25,80 g Triethylamin zugefügt. Nach weiteren 15 Minuten wurde die Mischung mit 916,80 g Wasser dispergiert. Zum Schluss wurde Aceton unter Vakuum destillativ entfernt. Man erhielt eine Dispersion mit folgenden Kenndaten:

| n.f.A | 40 Gew.-% |
|---|---|
| Viskosität (23°C, d=40/s) | 93 mPas |
| pH Wert | 7,8 |
| MTG : | 94 nm |

### Beispiel 4 (erfindungsgemäß)

672,50 g DPHA, 78,49 g Desmodur N 3300, 43,47 g HDI und 0,35 g Borchikat 24 wurden in einem Reaktor vorgelegt, auf 60 °C erwärmt und gerührt bis eine homogene Mischung entstand. Danach wurden 38,53 g DMPS, gefolgt von 150 g Aceton zu der Mischung gegeben und es wurde weiter bei 60° C gerührt bis der NCO-Gehalt einen Wert von 0,2 Gew.-% erreichte. Anschließend wurden der Mischung 26,45 g Triethylamin zugefügt. Nach weiteren 15 Minuten wurde die Mischung mit 954,50 g Wasser dispergiert. Zum Schluss wurde Aceton unter Vakuum destillativ entfernt. Man erhielt eine Dispersion mit folgenden Kenndaten:

| n.f.A | 47 Gew.-% |
|---|---|
| Viskosität (23°C, d=40/s) | 107 mPas |
| pH Wert | 7,4 |
| MTG : | 67 nm |

### Beispiel 5 (erfindungsgemäß)

658,78 g DPHA, 68,25 g Desmodur N 3300, 37,80 g HDI und 0,42 g Borchikat 24 wurden in einem Reaktor vorgelegt, auf 60 °C erwärmt und gerührt bis eine homogene Mischung entstand. Danach wurden 33,50 g DMPS, gefolgt von 130 g Aceton zu der Mischung gegeben und es wurde weiter 15 Minuten bei 60° C gerührt. Danach wurden der Mischung 23,00 g Triethylamin zugefügt und es wurde bei 60° C gerührt bis der NCO-Gehalt einen Wert von < 0,2 Gew.-% erreichte. Anschließend wurde die Mischung mit 830,00 g Wasser dispergiert. Zum Schluss wurde Aceton unter Vakuum destillativ entfernt. Man erhielt eine Dispersion mit folgenden Kenndaten:

| n.f.A | 50 Gew.-% |
|---|---|
| Viskosität (23°C, d=40/s): | 150 mPas |
| pH Wert | 7,5 |
| MTG : | 90 nm |

### Vergleichsbeispiel 6

187,10 g Laromer PE 44F, 13,74 g DMPS, 0,28 g DBTL, 23,55 g HDI, 47,67 g IPDI und 65 g Aceton wurden in einem Reaktor vorgelegt, auf 60 °C erwärmt und bei 60 °C gerührt bis der NCO-Gehalt einen Wert von 1,7 Gew.-% erreichte. Danach wurde die Reaktionsmischung auf 50 °C abgekühlt. Es wurden dazu 116,79 g DPHA zugegeben und 15 Minuten eingerührt. Im nächsten Schritt wurden zu der Mischung 9,55 g Triethylamin zugegeben und 15 Minuten verrührt. Anschließend wurde die Mischung mit 591,24 g Wasser dispergiert und mit 3,42 g Ethylendiamin / 11,5 g Wasser Gemisch kettenverlängert. Zum Schluss wurde Aceton unter Vakuum destillativ entfernt. Man erhielt eine Dispersion mit folgenden Kenndaten:

| n.f.A | 42 Gew.-% |
|---|---|
| Viskosität (23°C, d=40/s) | 35 mPas |
| pH Wert | 8,1 |
| MTG : | 89 nm |

### Vergleichsbeispiel 7

224,46 g PETiA, 17,63 g DMPS und 149,98 g Dicyclohexylmethan-4,4'-diisocyanat wurden in einem Reaktor vorgelegt und auf 50 °C erwärmt. Unter Rühren wurden dann 0,11 g Kosmos T9 Katalysator in zwei Portionen zugegeben. Die Reaktionsmischung wurde bei 60 °C gerührt bis der NCO-Gehalt einen Wert von 4,5 Gew.-% erreichte. Danach wurde die Reaktionsmischung auf 50 °C abgekühlt. Es wurden dazu 13,32 g Triethylamin zugegeben und 15 Minuten verrührt. Anschließend wurde die Mischung in 556,80 g Wasser dispergiert und mit 52,60 g einer 64%igen Lösung Hydrazin kettenverlängert. Nach Festgehalt-Einstellung auf ca. 40 Gew.-% erhielt man eine Dispersion mit folgenden Kenndaten:

| n.f.A | 40 Gew.-% |
|---|---|
| Viskosität (23°C, d=40/s) | 20 mPas |
| pH Wert | 8,5 |
| MTG : | 65 nm |

### Vergleichsbeispiele 8-10 und erfindungsgemäße Beispiel 11:

DPPA und die PUD Dispersion aus erfindungsgemäßen Beispiel 2 wurden mit einer herkömmlichen Polyacrylatdispersion (Bayhydrol A 2846) versetzt:

| | **Beispiel 8 Vergleich** | **Beispiel 9 Vergleich** | **Beispiel 10 Vergleich** | **Beispiel 11 erfindungsgemäß** |
|---|---|---|---|---|
| Bayhydrol A 2846 | 97,08 | 94,16 | 91,24 | 70,00 |
| DPPA | 2,92 | 5,84 | 8,76 | |
| Dispersion aus Beispiel 2 | | | | 30,00 |
| | Entmischung n. 1T RT | Entmischung n. 1T RT | Entmischung n. 1T RT | Keine Veränderung n. 2Wo 40°C |

Die Vermischung erfolgte per Hand mit einem Holzspaten. Die erhaltenen Dispersionen wurden bei Raumtemperatur und bei 40 °C gelagert. Die Dispersionen aus Vergleichsbeispielen 8 bis 10 zeigten bereits nach 1 Tag nach der Vermischung eine deutliche Phasentrennung, während die erfindungsgemäße Dispersion aus Beispiel 11 über zwei Wochen bei 40 °C homogen und ohne optische Veränderung blieb. Diese Ergebnisse bestätigen, dass sich die erfindungsgemäße Dispersion aus Beispiel 2 leicht und ohne Aufwand in einer handelsübliche Polyacrylat-Dispersion einarbeiten lässt, im Gegensatz zu Reaktivverdünner, der das erfindungsgemäße Reaktionsprodukt nicht enthält.

Anwendungstechnische Tests der erfindungsgemäßen Dispersion aus Beispiel 3, sowie der Vergleichsdispersionen aus Beispielen 6 und 7 im Vergleich zu einer handelsüblichen Polyurethandispersionen Bayhydrol UV 2282 wurden mit den in Tabellen 1 und 2 aufgezeichneten Formulierungen durchgeführt.

**Tabelle 1. Zusammensetzungen weißer Mattlack auf Basis von Dispersionen aus Beispiel 3, 6 und 7, sowie einer handelsüblichen UV Dispersion Bayhydrol UV 2282.**

| | **Beispiel 12 erfindungsgemäß** | **Beispiel 13 Vergleich** | **Beispiel 14 Vergleich** | **Beispiel 15 Vergleich** |
|---|---|---|---|---|
| PUD aus Beispiel 3 | 59.20 | | | |
| Bayhydrol UV 2282 | | 61.50 | | |
| PUD aus Beispiel 6 | | | 57.20 | |
| PUD aus Beispiel 7 | | | | 60.00 |
| dem. Wasser | 10.00 | 10.00 | 10.00 | 10.00 |
| Butylglykol | 1.00 | 1.00 | 1.00 | 1.00 |
| Pigmentpaste | 17.50 | 17.50 | 17.50 | 17.50 |
| TEGO^{®} Airex 902W | 0.40 | 0.40 | 0.40 | 0.40 |
| RHEOLATE^{®} 655:Water (1:1) | 1.52 | 1.17 | 1.15 | 0.89 |
| ACEMATT^{®} TS 100 | 1.80 | 0.83 | 1.13 | 1.07 |
| CERAFLOUR 929 | 1.38 | 1.00 | 1.00 | 1.03 |
| Omnirad 500/819 /BG/ TEGO^{®}Disperse 660C (50:17:24:1) | 2.75 | 2.75 | 2.75 | 2.75 |
| VE Wasser | 4.44 | 3.84 | 7.86 | 5.34 |
| Total | 100.00 | 100.00 | 100.00 | 100.00 |

| | | | | |
|---|---|---|---|---|
| Tego^{®} Airex 902W - Entschäumer, Evonik Acematt^{®} TS-100-Mattierungsmittel, Evonik Ceraflour^{®} 929 - Wachs, BYK Chemie Omnirad^{®} 500 - Photoinitiator, IGM Resins Omnirad^{®} 819 - Photoinitiator, IGM Resins Tego^{®} Disperse 660C - Dispergiermittel, Evonik | | | | |

**Tabelle 2. Zusammensetzung der in Beispielen 12 bis 15 eingesetzten Pigmentpaste**

| | | |
|---|---|---|
| VE Wasser | | 2.49 |
| DISPERBYK-2015 | Dispergiermittel, BYK | 0.86 |
| TEGO^{®} Foamex 810 | Entschäumer, Evonik | 0.14 |
| TIOXIDE^{®} TR 92 | Pigment, Huntsman | 14.00 |
| Rheovis^{®} PU1190/ Dowanol DPM 1:1 | Rheologie - Additive, BASF | 0.02 |
| Total | | 17.50 |

Die Beschichtungen wurden mit einer manuellen Airspray Spritzpistole auf Melamin-folierte MDF-Platten (einschichtig, Schichtstärke 120g/m²) aufgetragen, 10 Minuten bei 22 °C / 50 % Luftfeuchtigkeit abgelüftet, 20 min bei 45 °C getrocknet und anschließend mit einem UV Strahler bestrahlt (Hg Lampe, 120 W/cm² + Ga Lampe, 120 W/cm², Bandgeschwindigkeit ca. 7 m/min.). Die bestrahlten Platten wurden vor den anwendungstechnischen Prüfungen 16 Stunden bei 22°C konditioniert. Die Ergebnisse der anwendungstechnischen Test sind in der Tabelle 3 aufgeführt.

**Tabelle 3. Testergebnisse der Formulierungen aus den Beispielen 12 bis 15**

| | **Glanz** | | | **Bleistift-härte** | **DIN EN 68861-1 1B** | | | | | | **IKEA IOS-MAT-066 R0** | | | **IKEA IOS-MAT-066 R2** | | |
|---|---|---|---|---|---|---|---|---|---|---|---|---|---|---|---|---|
| | 20° | 60° | 85° | | Ethanol 1h | Rotwein 6h | Wasser 16h | Kaffee 16h | Senf 6h | Zwiebel 6h | Wasser 24h | Ethanol 6h | Kaffee 6h | Wasser 24h | Ethanol 1h | Kaffee 1h |
| Beispiel 12 | 3 | 18 | 24 | H | 5 | 4 | 5 | 4 | 5 | 5 | 5 | 5 | 4 | 5 | 5 | 5 |
| Beispiel 13 | 7 | 35 | 50 | 3H | 1 | 2 | 4 | 1 | 1 | 4 | 4 | 1 | 1 | 4 | 1 | 2 |
| Beispiel 14 | 5 | 30 | 43 | 3H | 5 | 2 | 5 | 2 | 2 | 4 | 5 | 1 | 3 | 5 | 5 | 4 |
| Beispiel 15 | 4 | 21 | 40 | 2H | 4 | 3 | 5 | 4 | 5 | 5 | 5 | 1 | 4 | 5 | 4 | 5 |

Wie die Tabelle 3 zeigt, erlaubt die erfindungsgemäße Zusammensetzung aus dem Beispiel 3 die Herstellung von harten Beschichtungen (Beispiel 12) mit seiden-mattem Glanz, die in der Chemikalienbeständigkeit sogar sowohl die herkömmlichen UV Polyurethandispersionen (Beispiel 13) als auch die nicht erfindungsgemäßen kettenverlängerten Dispersionen aus Beispielen 6 und 7 (Beispiele 14 und 15) übertreffen.

Die Dispersion aus Beispiel 5 wurde auch als Klarlack formuliert, wie in der Tabelle 4 dargestellt und im Vergleich zu einem Klarlack auf Basis von Bayhydrol UV 2282 anwendungstechnisch geprüft.

**Tabelle 4. Zusammensetzungen Klarlack auf Basis von Dispersionen aus Beispiel 5, sowie einer handelsüblichen UV Dispersion Bayhydrol UV 2282**

| | **Beispiel 16 erfindungsgemäß** | **Beispiel 17 Vergleich** |
|---|---|---|
| PUD aus Beispiel 5 | 70 | |
| Bayhydrol UV 2282 | | 70 |
| Omnirad 1173 | 1,0 | 0,7 |
| Byk 348 | 0,4 | |
| AMP 90 | | 0,3 |
| Total (g) | 71,4 | 71,0 |

| | | |
|---|---|---|
| Omnirad 1173 - Photoinitiator, IGM Resins Byk 348 - Silikontensid für wässrige Lacke, Byk Chemie AMP 90 - Puffer, Angus Chemical Co. | | |

Die Beschichtungen wurden mit einem Kasten-Rakel auf ein entsprechendes Substrat (einschichtig, Schichtstärke 150 µ nass) aufgetragen, 10 Minuten bei 23 °C / 45 % Luftfeuchtigkeit abgelüftet, 15 min bei 50 °C getrocknet und anschließend mit einem UV Strahler bestrahlt (Hg Lampe, 80 W/cm², Bandgeschwindigkeit ca. 5 m/min.). Die bestrahlten Platten wurden vor den anwendungstechnischen Prüfungen 16 Stunden bei 23 °C konditioniert. Die Ergebnisse der anwendungstechnischen Test sind in der Tabelle 5 aufgeführt.

**Tabelle 5. Test-Ergebnisse der Formulierungen aus den Beispielen 16 und 17**

| **Prüfung** | **Beispiel 16** | **Beispiel 17** |
|---|---|---|
| **Pendelhärte (n. 1T)** | 165s | 150s |
| **Bleistifthärte (n. 1T)** | 3H | HB |

| **Blockfestigkeit 24h RT; Last 0,5 kg/cm²** | 5E | 3D |
|---|---|---|
| **IKEA IOS-MAT-066 R2** | | |
| Wasser 24h | 5 | Blasen |
| Ethanol 1h | 5 | Blasen |
| Kaffee 1h | 5 | Blasen |

| **IKEA IOS-MAT-066 R0** | | |
|---|---|---|
| Wasser 24h | 5 | Blasen |
| Ethanol 6h | 5 | Blasen |
| Kaffee 6h | 5 | 2 |

| **DIN EN 68861-1 1B** | | |
|---|---|---|
| Senf 6h | 5 | 2 |
| Rotwein 6h | 5 | 2 |

Die in der Tabelle 5 dargestellten Ergebnisse der anwendungstechnischen Prüfungen in Klarlackformulierungen bestätigen, dass die erfindungsgemäße Zusammensetzung aus dem Beispiel 5 auch in Klarlack-Formulierungen (Beispiel 16) zu einer verbesserten Härte, Blockfestigkeit und einer besseren Chemikalienbeständigkeit führt als die handelsüblichen Polyurethandispersion aus Beispiel 17.

Die erfindungsgemäßen Dispersionen aus Beispielen 1 und 2 wurden auch in Abmischungen mit konventionellen nicht UV-funktionellen Polyacrylatdispersionen getestet. Das Ziel war durch Zugabe von kleinen Mengen der erfindungsgemäßen Dispersionen die Eigenschaften zu verbessern. Die Beschichtungen wurden mit einem Kasten-Rakel auf ein entsprechendes Substrat (einschichtig mit einer Schichtstärke 150 µ nass für die Pendelhärte- und Blockfestigkeitsmessungen), aufgetragen, 10 Minuten bei 23 °C / 45 % Luftfeuchtigkeit abgelüftet, 15 min bei 50 °C getrocknet und anschließend mit einem UV Strahler bestrahlt (Hg Lampe, 80 W/cm², Bandgeschwindigkeit ca. 5 m/min.). Für die Chemikalienbeständigkeitsbestimmung auf Buchenholz erfolgte die Auftragung zweischichtig mit einer Schichtstärke 150 µ nass. Die bestrahlten Platten wurden vor den anwendungstechnischen Prüfungen 16 Stunden bei 23 °C konditioniert. Die Substrate mit Vergleichsbeschichtungen aus Beispielen 24 und 31 wurden nach 7 Tagen Konditionierung bei 23 °C geprüft. Die Ergebnisse der anwendungstechnischen Test sind in der Tabelle 6 aufgeführt.

**Tabelle 6 Zusammensetzungen Klarlacke auf Basis von Dispersionen aus Beispielen 1 und 2 in Abmischungen mit konventionellen PAC Dispersionen.**

| | **Beispiel 18** | **Beispiel 19** | **Beispiel 20** | **Beispiel 21** | **Beispiel 22** | **Beispiel 23** | **Beispiel 24** | **Beispiel 25** | **Beispiel 26** | **Beispiel 27** | **Beispiel 28** | **Beispiel 29** | **Beispiel 30** | **Beispiel 31** |
|---|---|---|---|---|---|---|---|---|---|---|---|---|---|---|
| | **9:1** | **8:2** | **7:3** | **9:1** | **8:2** | **7:3** | **-** | **9:1** | **8:2** | **7:3** | **9:1** | **8:2** | **7:3** | **-** |
| | Erfindungsgemäß | | | | | | Vergleich | Erfindungsgemäß | | | | | | Vergleich |
| Picassian AC-169 | 45.0 | 40.0 | 35.0 | 45.0 | 40.0 | 35.0 | 50.0 | | | | | | | |
| Carboset CA7160 RC | | | | | | | | 45.0 | 40.0 | 35.0 | 45.0 | 40.0 | 35.0 | 50.0 |
| PUD aus Beispiel 1 | 5.0 | 10.0 | 15.0 | | | | | 5.0 | 10.0 | 15.0 | | | | |
| PUD aus Beispiel 2 | | | | 5.0 | 10.0 | 15.0 | | | | | 5.0 | 10.0 | 15.0 | |
| IRGACURE 500 | 0.5 | 0.5 | 0.5 | 0.5 | 0.5 | 0.5 | | 0.5 | 0.5 | 0.5 | 0.5 | 0.5 | 0.5 | |
| DOWANOL DPM | | | | | | | 0.5 | | | | | | | 0.9 |
| DOWANOL PNB | | | | | | | | | | | | | | 0.4 |
| VE Wasser | | | | | | | | | | | | | | 10.0 |
| Total (g) | 50.5 | 50.5 | 50.5 | 50.5 | 50.5 | 50.5 | 50.5 | 50.5 | 50.5 | 50.5 | 50.5 | 50.5 | 50.5 | 61.3 |

| | | | | | | | | | | | | | | |
|---|---|---|---|---|---|---|---|---|---|---|---|---|---|---|
| Irgacure 500 - Photoinitiator, BASF Dowanol DPM und PNB - Lösemittel, Dow Chemicals | | | | | | | | | | | | | | |

**Tabelle 7. Test-Ergebnisse der Formulierungen aus den Beispielen 18 -31**

| **Test** | **Beispiel 18(e)** | **Beispiel 19(e)** | **Beispiel 20 (e)** | **Beispiel 21 (e)** | **Beispiel 22 (e)** | **Beispiel 23 (e)** | **Beispiel 24 (v)** | **Beispiel 25 (e)** | **Beispiel 26 (e)** | **Beispiel 27 (e)** | **Beispiel 28 (e)** | **Beispiel 29 (e)** | **Beispiel 30 (e)** | **Beispiel 31 (v)** |
|---|---|---|---|---|---|---|---|---|---|---|---|---|---|---|
| Pendelhärte (n. 1T, sek) | 92 | 94 | 93 | 95 | 94 | 93 | 82 | 47 | 47 | 51 | 45 | 47 | 49 | 42 |

| **DIN EN 68861-1 1B^{∗}** | | | | | | | | | | | | | | |
|---|---|---|---|---|---|---|---|---|---|---|---|---|---|---|
| Ethanol 1h | 3 | 3 | 3 | 3 | 3 | 3 | 4 | 3 | 3 | 3 | 3 | 3 | 3 | 3 |
| Rotwein 6h | 5 | 5 | 5 | 5 | 5 | 5 | 5 | 5 | 5 | 5 | 5 | 5 | 5 | 4 |
| Kaffee 16h | 5 | 5 | 5 | 5 | 5 | 5 | 5 | 5 | 5 | 5 | 5 | 5 | 5 | 4 |
| Wasser 16h | 5 | 5 | 5 | 5 | 5 | 5 | 5 | 5 | 5 | 5 | 5 | 5 | 5 | 4 |
| Blockfestigkeit Last: 100g/cm² 16 RT | 5E | 5E | 5E | 4E | 5E | 5E | 3D | 2D | 4E | 4E | 3D | 3D | 4D | 1C |

| | | | | | | | | | | | | | | |
|---|---|---|---|---|---|---|---|---|---|---|---|---|---|---|
| ^{∗}auf Buchenholz | | | | | | | | | | | | | | |

Aus den Daten in der Tabelle 7 lässt sich folgende Schlussfolgerung ziehen:
In Kombination mit Picassian AC-169 zeigen die erfindungsgemäßen Produkte sehr gute Chemikalienbeständigkeit und eine deutliche Verbesserung der Blockfestigkeit, sowie eine um ca. 10% erhöhte Härte im Vergleich zu der nicht modifizierten Polyacrylatdispersion. Auch in Kombination mit Carboset CA 7160 zeigen die erfindungsgemäßen Produkte eine Verbesserung der Blockfestigkeit und eine Verbesserung der chemischen Beständigkeit im Vergleich zu der nicht modifizierten Dispersion.

Die Dispersionen aus dem erfindungsgemäßen Beispiel 3 und dem Vergleichsbeispiel 7 wurden ebenfalls in Abmischungen mit einer konventionellen nicht UV-funktionellen Polyacrylat-Dispersion Bayhydrol A 2846 getestet. Die Beschichtungen wurden mit einem Kasten-Rakel auf ein entsprechendes Substrat (einschichtig mit einer Schichtstärke 180 µ), aufgetragen, 10 Minuten bei 23 °C / 45 % Luftfeuchtigkeit abgelüftet, 15 min bei 50 °C getrocknet und anschließend mit einem UV Strahler bestrahlt (Hg Lampe, 80 W/cm², Bandgeschwindigkeit ca. 5 m/min.). Für die Chemikalienbeständigkeitsbestimmung auf Buchenholz erfolgte die Auftragung zweischichtig mit einer Schichtstärke jeweils 180 µ nass. Die bestrahlten Platten wurden vor den anwendungstechnischen Prüfungen 24 Stunden bei 23 °C konditioniert. Die Formulierungen und die Ergebnisse der anwendungstechnischen Test sind in der Tabelle 8 aufgeführt.

**Tabelle 8 Zusammensetzungen und Test-Ergebnisse der Klarlacke auf Basis von Dispersionen aus den Beispielen 3 und 7 in Abmischungen mit einer konventionellen PAC Dispersion**

| | **Beispiel 32 Vergleich** | **Beispiel 33 erfindungsgemäß** | **Beispiel 34 erfindungsgemäß** | **Beispiel 35 Vergleich** | **Beispiel 36 Vergleich** |
|---|---|---|---|---|---|
| BAYHYDROLA 2846 | 50 | 40 | 35 | 40 | 35 |
| PUD aus Beispiel 3 | | 10 | 15 | | |
| PUD aus Beispiel 7 | | | | 10 | 15 |
| OMNIRAD 1173 | | 1 | 1 | 1 | 1 |
| Total (g) | **50** | **51** | **51** | **51** | **51** |

| **Pendelhärte (sek)** | | | | | |
|---|---|---|---|---|---|
| nach 1 Tag | 43 | 42 | 51 | 51 | 65 |
| nach 7 Tagen | 86 | 78 | 79 | 85 | 93 |

| **DIN EN 68861-1 1B (auf Buche)** | | | | | |
|---|---|---|---|---|---|
| Rotwein 6h | 2 | 5 | 5 | 5 | 5 |
| Ethanol 1h | 2 | 2 | 2 | 2 | 2 |
| Kaffee 16h | 2 | 5 | 5 | 5 | 5 |
| **Blockfestigkeit 100g/cm² 16h RT** | 0A | 3D | 5F | 2C | 4E |

Aus der Tabelle 8 ist ersichtlich, dass bereits die Zugabe kleiner Mengen (20-30 Gew.-%) der erfindungsgemäßen Dispersion aus dem Beispiel 3 wie auch der Vergleichsdispersion aus dem Beispiel 7 zu einer herkömmlichen Polyacrylatispersion, wie z.B. Bayhydrol A 2846, die chemische Beständigkeit deutlich verbessert. Dies gilt insbesondere für die Beständigkeit gegen färbende Substanzen. Allerdings ist nur die erfindungsgemäße Dispersion aus dem Beispiel 3 zusätzlich in der Lage, auch die Blockfestigkeit entscheidend zu verbessern.

Die erfindungsgemäße Dispersionen können auch zur Verbesserung der Eigenschaften marküblichen UV-härtenden Polyurethandispersionen verwendet werden. Tabelle 9 stellt ein Beispiel solcher Verwendung dar.

Die in der Tabelle 9 dargestellten Dispersionen wurden mit einem Spiral-Rakel auf ein entsprechendes Substrat (einschichtig mit einer Schichtstärke 36 µ), aufgetragen, 10 Minuten bei 23 °C / 45 % Luftfeuchtigkeit abgelüftet, 15 min bei 50 °C getrocknet und anschließend mit einem UV Strahler bestrahlt (Hg Lampe, 80 W/cm², Bandgeschwindigkeit ca. 15 m/min.).

**Tabelle 9 Zusammensetzungen und Test-Ergebnisse der Klarlacke auf Basis von Dispersionen aus den Beispielen 2 in Abmischungen mit einer konventionellen UV Polyurethandispersion**

| | | | **Beispiel 37 Vergleich** | **Beispiel 38 erfindungsgemäß** | **Beispiel 39 erfindungsgemäß** |
|---|---|---|---|---|---|
| BAYHYDROL UV 2720/1 | | | 86,1 | 68,9 | 60,0 |
| PUD aus Beispiel 2 | | | | 20,0 | 30,0 |
| AMP 90 | | | 0,2 | 0,2 | 0,1 |
| DISPERBYK 191 | | | 0,9 | 0,7 | 0,6 |
| DEUTERON MK | | | 1,9 | 1,5 | 1,3 |
| ACEMATTTS 100 | | | 1,3 | 1,0 | 0,9 |
| BYK-093 | | | 1 | 0,8 | 0,7 |
| BYK-348 | | | 0,4 | 0,3 | 0,3 |
| ESACURE KIP 100 F | | | 4 | 3,2 | 2,8 |
| ISOPROPANOL | | | 4 | 3,2 | 2,8 |
| TAFIGEL PUR 45 | | | 0,2 | 0,1 | 0,5 |
| Total (g) | | | **100** | **100** | **100** |

| **Test-Ergebnisse** | | | | | |
|---|---|---|---|---|---|
| | **Glanz (auf Glas)** | | | | |
| | | 60° | 8 | 6 | 7 |
| | | 85° | 24 | 17 | 16 |
| | | Haze | 51 | 41 | 43 |
| | **DIN 68861-1 (auf PVC)** | | | | |
| | | lod-Lösung; 2 Min, sofort | 2 | 2 | 2,5 |
| | | lod-Lösung; 2 Min, n. 1 Tag | 2 | 3,5 | 4 |
| | | **Abrieb** (Taber Abraser, auf PVC, mg) | 18,4 | 13,3 | 10,4 |

| | | | | | |
|---|---|---|---|---|---|
| DISPERBYK 191 - Dispergieradditiv für wässrige Lacksysteme, Byk Chemie DEUTERON MK - Mattierungsmittel, Deuteron GmbH BYK-093 - silikonhaltiger Entschäumer für wässrige Lacksysteme, Byk Chemie ESACURE KIP 100 F - Photoinitiator, IGM Resins TAFIGEL PUR 45 - Assoziativverdicker, Münzing Chemie | | | | | |

Die Tabelle 9 bestätigt, dass die erfindungsgemäße Dispersion aus Beispiel 2 bereits in kleinen Mengen (20-30 Gew.-%) die Beständigkeit einer herkömmlichen UV-härtenden Beschichtung gegen stark färbende Substanzen deutlich verbessert. Auch die Abriebbeständigkeit der auf den Mischungen basierenden Beschichtungen ist deutlich höher. Die erfindungsgemäße Dispersion aus Beispiel 2 ist auch mit der Bayhydrol-UV-Dispersion gut verträglich, was sich in guten Glanz-Werten und sogar besseren Haze-Werten wiederspiegelt. Die Kombination dieser Eigenschaften würde besonders im Bereich PVC Fußboden Beschichtung einen technischer Vorteil darstellen.

## Patentansprüche

1. Wässrige Zusammensetzung enthaltend ein Produkt, erhalten oder erhältlich aus der Reaktion eines Reaktionsgemisches enthaltend
a) Eine Polyisocyanatkomponente A mit einer durchschnittlichen Isocyanatfunktionalität von wenigstens 2,2 NCO-Gruppen pro Molekül;
b) Wenigstens eine ionische oder potentiell ionische hydrophilierende Verbindung B mit wenigstens einer Hydroxylgruppe pro Molekül; und
c) Eine optional hydroxyfunktionelle strahlenhärtbare Komponente C, welche wenigstens 2 (Meth)acrylatgruppen pro Molekül enthält;
Wobei die Zusammensetzung bezogen auf ihr Gesamtgewicht eine Doppelbindungsdichte von wenigstens 7 mol/kg aufweist.

2. Die Zusammensetzung nach Anspruch 1, wobei das Produkt der Reaktion der Komponenten A, B und optional C eine Säurezahl von wenigstens 80 mg KOH/g aufweist.

3. Die Zusammensetzung nach Anspruch 1 oder 2, wobei die Komponente C einen Gewichtsanteil von wenigstens 50 Gew.-% bezogen auf die Summe der Gewichtsanteile der Komponenten A, B und C aufweist.

4. Die Zusammensetzung nach einem der Ansprüche 1 bis 3, wobei die Polyisocyanatkomponente A zu wenigstens 90 Gew.-% ihres Gesamtgewichtes aus aliphatischen und/oder cycloaliphatischen Polyisocyanaten besteht.

5. Die Zusammensetzung nach einem der Ansprüche 1 bis 4, wobei die Polyisocyanatkomponente A ein oligomeres Polyisocyanat enthält

6. Die Zusammensetzung nach einem der Ansprüche 1 bis 5, wobei das molare Verhältnis von isocyanatreaktiven Gruppen zu Isocyanatgruppen im Reaktionsgemisch zwischen 1:1 und 1,2 : 1 beträgt.

7. Die Zusammensetzung nach einem der Ansprüche 1 bis 6, wobei die Komponente C eine OH-Zahl zwischen 1 und 60 aufweist.

8. Die Zusammensetzung nach einem der Ansprüche 1 bis 7, wobei die Komponenten A, B und C einen Gewichtsanteil von wenigstens 90 Gew.-% bezogen auf alle Bestandteile der Dispersion mit Ausnahme von Wasser haben.

9. Wässrige Beschichtungszusammensetzung enthaltend als Komponente (i) wenigstens eine wässrige Zusammensetzung wie in einem der Ansprüche 1 bis 8 definiert und als Komponente (ii) wenigstens eine Polyacrylatdispersion oder wenigstens eine Polyurethandispersion oder eine Mischung aus wenigstens einer Polyacrylatdispersion und wenigstens einer Polyurethandispersion.

10. Beschichtungszusammensetzung nach Anspruch 9, wobei der Gewichtsanteil des Festkörpers der Komponente (i) bezogen die Gesamtmasse des gesamten Festkörpers der Komponenten (i) und (ii) 5 bis 60 Gew.-% beträgt.

11. Beschichtung erhalten oder erhältlich aus der Beschichtungszusammensetzung nach Anspruch 9 oder 10.

12. Oberfläche beschichtet mit der Beschichtungszusammensetzung nach Anspruch 9 oder 10.

13. Beschichtung erhalten oder erhältlich aus der wässrigen Zusammensetzung nach einem der Ansprüche 1 bis 8.

14. Oberfläche beschichtet mit der Beschichtung nach Anspruch 13.

15. Die Oberfläche nach Anspruch 12 oder 14, aus gewählt aus der Gruppe bestehend aus Holz, Kunststoff, Metall und Verbundwerkstoffen.

16. Verwendung der wässrigen Zusammensetzung wie in den Ansprüchen 1 bis 8 definiert zur Verbesserung der Blockfestigkeit und/oder der Chemikalienbeständigkeit einer Polyacrylat- und/oder Polyurethandispersion.
